# EUROPEAN PATENT APPLICATION

(11) **EP 1 775 953 A1**
(43) Date of publication of application: **18.04.2007**
(21) Application number: 05022486.4
(22) Date of filing: 14.10.2005
(51) Int. Cl.: H04N 7/24, H04N 5/00, H04N 5/44, H04N 5/50

(54) **Switching between digital video streams using buffering of second digital video stream**

(71) Applicant: UNIVERSITEIT GENT, 9000 Gent (BE); IBBT vzw, 9000 GENT (BE)
(72) Inventor: Van Quickenborne, Frederic, 8500 Kortrijk (BE); De Neve, Philippe, 9040 Sint-Amandsberg (BE); Strobbe, Matthias, 8870 Izegem (BE); Verstraete, Vincent, 8870 Izegem (BE); De Turck, Filip, 9550 Steenhuize-Wijnhuize (BE)
(74) Representative: Bird, William Edward

(57) **Abstract**

A method (200, 300) for handling a plurality of digital video streams, each of the digital video streams being encoded in sequences of frames. Each of the sequences of frames comprising a key frame, at least one reference frame and further frames, said key frame and at least one reference frame suitable for deriving frame information for said further frames. The method comprises displaying (204) at least a first digital video stream to be displayed and buffering (206) at least one of said key frame or said at least one reference frame for a moving window of at least a second digital video stream allowing extraction of moving images from the buffered key frame or reference frame(s) when the second digital video stream is selected to be displayed. The invention also relates to a controller for controlling buffering of video information of a digital video stream not-displayed at that moment.

## Description

### Technical field of the invention

The present invention relates to display of digital video streams such as e.g. digital television. More particularly, the present invention relates to methods and devices for display of digital video streams capable of switching between digital video streams.

### Background of the invention

The use of digital video streams, such as e.g. in digital television, becomes a widely spread method for distributing information, especially as they allow the provision of high quality video and enable flexible use of the information provided. As digitisation of video content requires a large amount of data and as the bandwidth for transporting this data between a server and a client is limited, compression is needed. Such compression, also referred to as a type of encoding, is done at the server side, for instance at the video broadcaster-side. At the client side, a decompression process, also referred to as decoding, reconstructs the video pictures from the compressed video data. Typically, video specific compression and decompression processes profit from the digital video sequence structure to reduce the file size of the video. Two characteristics of video sequences are exploited to compress video data: as in still pictures, pixels correlate with their neighbouring pixels enabling so-called spatial compression and successive pictures also correlate with each other enabling temporal compression. Using this compression technique leads to the image content of different pictures or video frames being dependent upon each other. Hence, to decode a certain picture in a video stream, information from previous and/or next pictures may be needed. Because this dependency cannot be unlimited, every number of pictures a key frame is inserted in the digital video stream, this key frame being independent of every other frame. The other frames typically are dependent on this key frame. A digital video stream typically comprises sequences of frames comprising a key frame and other frames which may be directly or indirectly dependent on the key frame. In the different Motion Picture Experts Group (MPEG) standards, which are often used compression/decompression standards, such sequences of frames are also referred to as Groups Of Pictures (GOP).

The need for compression and decompression of digital video stream data typically results in a delay when an observer wants to switch between two video streams, as a newly selected video stream can only be displayed after a key frame is received and decoded. The moment the key frame is received, it is possible to decode all the further frames of the video stream. The time needed to receive a key frame and corresponding dependent frames may cause the largest delay. Transmission of digital video streams typically is done in spaced sequences. The time between receipt of two subsequent key frames may be up to a few seconds, depending on the length of the sequence of frames used in the compression/decompression (CODEC) system and on the moment switching between digital video streams is performed. The switching process between digital video streams thus may take significantly longer than the time needed for switching between analogue video streams. This may be disturbing and annoying for an observer who wants to switch quickly between real-time digital video streams, i.e. to "zap" between different real-time digital video streams.

The above described problem of delay in presented video stream during switching is known and a number of methods for solving this problem have already been described.

A number of methods is focused on influencing the data streams in the transport stream in order to obtain improved switching. E.g. in US 2003/0048808 A1 a method is described wherein, in order to obtain faster switching, the data stream for a newly selected content channel is temporarily sent at a higher rate, such that the data stream is received quicker and consequently, displaying of the data stream can be performed quicker. In order to obtain faster switching, the method requires communication about the switching between the client terminal and the server and adaptations for the transmission at the server side. In WO 2004/019530, a method is described for allowing seamless switching between data streams, whereby the data rate of the data streams may be adjusted to synchronise start and end points in the data streams. In this way a seamless transition between the data streams can be provided. Nevertheless, the latter results in a delay in switching from the old data stream to the new data stream, i.e. upon the act of initiating switching, the old data stream is still shown for a while, and requires changes in the creation of transport streams which may be CODEC dependent.

Alternatively, other methods operate on the client side, making e.g. use of additional components. In US 2004/0194134 A1 a method for fast switching between channels in a digital television transport stream is described, whereby a first tuner/decoder is used for displaying a first channel of a digital television transport stream and whereby a second tuner/decoder is used for storing a recent full-frame video still image from other channels of a digital television transport stream. When switching to a second channel, a stored video still image for the second channel is displayed using the second tuner/decoder, until sufficient data is received to generate real-time video for the second channel. The method requires at least two tuner/decoders and provides a still image during the switching time. Similar thereto, US 2004/0181813 A1 also describes a method for fast switching between channels in a digital television transport stream using a second tuner/decoder, e.g. a tuner/decoder present in the system to allow picture-in-picture imaging. In one embodiment, the document describes that additional video streams can be selected and decoded using spare tuner/decoders. The system therefor requires a spare tuner/decoder system for each video stream to which fast switching is to be obtained. In another embodiment, the document describes a method comprising the storage of program identifying information to allow, upon zapping, extracting the necessary video stream as soon as it is available. Nevertheless, a delay still will occur, determined by the time needed to provide the necessary video stream data. In order to further fasten the display of a newly selected video stream, an I-frame may be cached. The latter allows providing a still image during the delay time.

None of the above prior art systems allows fast switching between digital video streams whereby a video stream is nearly immediately displayed, without the need for a large number of additional components or communication between the client and the server.

### Summary of the invention

It is an object of the present invention to provide apparatus and methods allowing fast and qualitative switching between digital video streams. It is an advantage of embodiments of the present invention that fast switching between digital video streams can be performed without the need for communication between the receiver and the server side. It is furthermore an advantage of embodiments of the present invention that fast switching can be performed by introducing only minor changes to the equipment at the receiver side, i.e. for example without the need for a second set-top box. It is also an advantage of specific embodiments of the present invention that there is no need for additional decoders to obtain the fast and qualitative switching. It is an advantage of embodiments of the present invention that switching is substantially as fast and as good as can be obtained for switching between channels on an analogue television system.

The above objective is accomplished by a method and device according to the present invention.

The present invention relates to a method for handling a plurality of digital video streams, the method comprising displaying at least a first digital video stream to be displayed and buffering video information for a moving window of at least a second digital video stream allowing extraction of moving images from the buffered video information when the second digital video stream is selected to be displayed. A moving window may be a window that comprises most recently received information about the digital video stream. The window may be frequently refreshed in order to comprise most recently received information. The updating may be done on a frame-by-frame basis or on a sequence of frames basis, e.g. a buffer is refreshed every time a reference frame is received. Allowing extraction of moving images from the buffered video information may be allowing extraction of moving images from the buffered video information for displaying the second digital video information substantially in a real-time manner. Substantially in a real-time manner may be with a small delay compared to receipt of the corresponding information in the second digital video stream. Substantially in a real-time manner may be with a delay of maximal the showing time for one sequence of frames. Said buffering may be buffering video information of a moving window of at least a second digital video stream allowing extraction of moving images from the buffered video information as to combine the moving images with further received video information of the second digital video stream when the second digital video stream is selected to be displayed.

Each of the digital video streams may be encoded in sequences of frames, each of the sequences of frames comprising a key frame, at least one reference frame and further frames, said key frame and at least one reference frame suitable for deriving frame information for said further frames, wherein buffering video information may comprise buffering at least one of said key frame or said at least one reference frame of at least a second digital video stream. It is an advantage of embodiments of the present invention that for at least a second digital video stream, but preferably for a plurality of further digital video streams, frame information is buffered that allows reducing the delay when switching from a first digital video stream to any of these further digital video streams. Digital video streams may refer to any type of framed information transferred in a sequence of sequences of frames. The latter may e.g. include 3D video images.

The method may comprise not buffering all of said further frames for a window of at least a second digital video stream. It is an advantage of embodiments of the present invention that not all frame information needs to be buffered. In this way a smart buffering is performed. The method may comprise not buffering any of said further frames for at least a second digital video stream

Said buffering video information may comprise buffering video information in an encoded format. It is an advantage of embodiments of the present invention that buffering of encoded frames is performed reducing the needed memory space and avoiding the need for first decoding the frames to be buffered. Consequently less decoding time may be needed which is advantageous as the major part of the buffered frames will not be used anyway.

Buffering said at least one of said key frame or said at least one reference frame may comprise buffering the key frame and all reference frames of a sequence of frames for said window of at least a second digital video stream. Buffering the key frame and all reference frames may allow extraction of moving images with a sufficient high quality.

With a moving window of at least a second digital video stream there may be a number of most recently received sequences of frames, e.g. a few most recently received sequences of frames, e.g. three most recently received sequences of frames or the most recently received sequence of frames or the most recently received sequence of frames and the last but one most recently received sequence of frames

Buffering said at least one of said key frame or said at least one reference frame furthermore may comprise buffering no further frames in a first half of a sequence of frames and buffering all further frames in a second half of a sequence of frames. The latter may allow synchronising the display and the receipt of sequences of frames of a second digital video stream once selecting of the second digital video stream is performed.

Said buffering may comprise buffering said frames of the most recently received sequence of frames for said at least a second digital video stream. The latter may allow, upon selection, to display digital video streams in "real time". The buffering also may comprise buffering at least one of a key frame or reference frame(s) from a last but one received sequence of frames for said at least a second digital video stream. The buffering also may consist of buffering said frames of the most recently received sequence of frames for said at least a second digital video stream.

The method may comprise refreshing said buffering when a new most recently received sequence of frames for said at least a second digital video stream is received. Refreshing said buffering may be reapplying the buffering step wherein buffering at least one of said key frame or said at least one reference frame of the most recently received sequence of frames for at least a second digital video stream is performed. Refreshing said buffering also may be applied after part of a new most recently received sequence of frames has already been buffered, the refreshing then referring to removal of the last but one received sequence of frames.

Buffering for at least a second digital video stream may comprise buffering for a plurality of further digital video streams. It is an advantage of embodiments of the present invention that a plurality of further digital video streams can be made available for fast switching without the need for decoding all of the plurality of further digital video streams.

The method furthermore may comprise decoding at least part of said buffered video information, e.g. key frame or reference frames, for at least one of said at least a second digital video stream. The decoding may be performed using spare time of the decoder used for displaying the at least one first digital video stream. The decoding may be performed using a spare decoder. The spare decoder may be a decoder typically used for picture-in-picture displaying. It may be an advantage of some embodiments of the present invention that part of the buffered video information, e.g. key frame or reference frames, are already decoded allowing a further decrease of the delay during switching between digital video streams. It may be an advantage that not all frames in a sequence of frames for a digital video stream need to be decoded but that only key frames and/or reference frames are decoded.

At least one of the digital video streams may comprise a number of video layers, e.g. encoded in sequences of frames, wherein buffering may be performed for at least one layer of said at least a second digital video stream. Either all layers can be buffered or a selection of the video layers may be buffered. The different video layers may comprise different levels of detail, whereby the buffering may be buffering of the video layer having the lowest image detail. Buffering also may be performed on a plurality of video layers comprising less image detail then the non-buffered video layers

The method furthermore may comprise, prior to said buffering, selecting said at least a second digital video stream based on a context of said plurality of digital video streams. Selecting based on context of said plurality of digital video streams may be based on statistical information of a client's viewing behaviour or may be based on another analysis of a client's viewing behaviour, such as e.g. by a neural network. Alternatively, said selecting at least a second digital video stream may be based on which at least one digital video stream is displayed. The plurality of digital video streams may be ranked and selecting at least a second digital video stream may be based on said ranking.

The method furthermore may comprise, providing to the viewer an indication of the digital video streams for which video information, e.g. at least one of said key frame or said at least one reference frame, are buffered. The latter provides a user friendly interface for clients that which to fastly switch between different digital video streams.

The buffering may comprise buffering said video information, e.g. said at least one of said key frame or said reference frame(s), with a resolution or size lower than a resolution or size of the received video information, e.g. key frame or reference frame(s).

The invention also relates to a method for switching between a plurality of digital video streams, the method comprising displaying at least a first digital video stream to be displayed and buffering video information for a moving window of at least a second digital video stream allowing extraction of moving images from the buffered video information when the second digital video stream is selected to be displayed, and
upon selection of said digital second video stream for displaying,
extracting and displaying moving images from the buffered video information and after said extracting and displaying, displaying newly received sequences of frames for said second digital video stream.

Said displaying newly received sequences of frames may comprise receiving each frame of said sequence of frames in a buffer, decoding said frames and displaying said frames.

Each of the digital video streams may be encoded in sequences of frames, each of the sequences of frames comprising a key frame, at least one reference frame and further frames, said key frame and at least one reference frame suitable for deriving frame information for said further frames, wherein buffering video information may comprise buffering at least one of said key frame or said at least one reference frame of at least a second digital video stream.

The method furthermore may comprise, upon selection of said second digital video stream for displaying, adjusting the number of frames displayed in order to synchronise receiving sequences of frames for said second digital video stream and displaying newly received sequences of frames for said second digital video stream. The method for switching may comprise any of the features as described above for the method for handling a plurality of digital video streams.

The invention also relates to a controller for handling a plurality of digital video streams, the controller comprises means for controlling the display of at least a first digital video stream characterised in that the controller furthermore comprises means for controlling buffering video information for a moving window of at least a second digital video stream allowing extraction of moving images from the buffered video information when the second digital video stream is selected to be displayed.

Each of said digital video streams may comprise sequences of frames, each of said sequences of frames comprising at least a key frame, at least one reference frame and further frames, said at least one key frame and said at least one reference frame suitable for deriving frame information for said further frames, wherein said means for controlling buffering video information may comprise a means for controlling buffering at least one of said key frame or said at least one reference frame of at least a second digital video stream.

Said means for controlling buffering may be adapted so as to not buffer all of said further frames.

Said means for controlling buffering may be adapted so as to said buffer video information, e.g. at least one of said key frame or said at least one reference frame, in an encoded format.

The controller may be adapted for, upon selection of a second digital video stream to be displayed, controlling extraction and display of moving images from said buffered video information, e.g. buffered key frame or reference frames, for said second digital video stream and said controller may be adapted for, after said extraction and display, controlling display of newly received video information, e.g. newly received sequences of frames, for said second digital video stream. The controller may be adapted for, upon the display of moving images for said second digital video stream, synchronising the receipt of video information, e.g. sequences of frames, and the display thereof.

The invention also relates to a device for handling a plurality of digital video streams, the device comprising a buffer for buffering frames from a plurality of video images and a controller for controlling the display of at least a first digital video stream and for controlling buffering of video information for a moving window of at least a second video stream to said buffer, said buffering allowing extraction of moving images from the buffered video information when the second digital video stream is selected to be displayed.

Each of said digital video streams may comprise sequences of frames, each of said sequences of frames comprising at least a key frame, at least one reference frame and further frames, said at least one key frame and said at least one reference frame suitable for deriving frame information for said further frames. Said buffered video information may comprise at least one of a key frame or at least one reference frame of said at least second digital video stream.

The device furthermore may comprise a decoder for decoding of frames of said at least a first digital video stream and for decoding of said buffered video information, e.g. key frame or reference frame(s). The controller may be adapted for controlling said decoding of the buffered video information, e.g. key frame or reference frame(s), when the second digital video stream is selected to be displayed. The buffer for buffering frames from a plurality of video images may comprise a first sub-buffer for buffering frames of a first video stream and at least one second sub-buffer for buffering video information, e.g. at least one of said key frame or said at least one reference frame, for at least a second digital video stream. Such sub-buffers may be virtually separate buffers or such buffers may be physically separate buffers. The controller may have any of the above described features

The invention also relates to a display system for displaying at least one digital video stream from a plurality of video streams, the display system comprising a controller as described above or a device for handling a plurality of digital video frames as described above.

The invention furthermore relates to a computer program product for executing the method of handling a plurality of digital video streams and/or for executing part of the method for switching between digital video streams. The invention also relates to a machine readable data storage device for storing the computer program or to the transmission of such a computer program product over a local or wide area telecommunications network.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematic overview of an exemplary environment including devices according to the first and/or second embodiment of the present invention.
Fig. 2 is a schematic overview of a controller for handling a plurality of digital video streams according an embodiment of to the present invention.
Fig. 3 is a schematic overview of an exemplary method for handling a plurality of digital video streams according to the third embodiment of the present invention.
Fig. 4 is a schematic overview of an exemplary method for switching between digital video streams according to the third embodiment of the present invention.
Fig. 5 is a schematic overview of the frames that are buffered and the frames that are displayed for a first decoding and displaying scenario according to the third embodiment of the present invention.
Fig. 6 is a schematic overview of the frames that are buffered and the frames that are displayed for a second decoding and displaying scenario according to the third embodiment of the present invention.
Fig. 7 is a schematic overview of the frames that are buffered and the frames that are displayed for a third decoding and displaying scenario according to the third embodiment of the present invention.
Fig. 8 is a schematic overview of an exemplary trajectory for video streams in a method for handling a plurality of digital video streams according to the third embodiment of the present invention.
Fig. 9 is a schematic overview of an exemplary computing system suitable for running a method according to the third embodiment of the present invention.

In the different figures, the same reference signs refer to the same or analogous elements.

### Definitions

The following terms are provided solely to aid in the understanding of the invention. These definitions should not be construed to have a scope less than understood by a person of ordinary skill in the art. In the present invention with digital video stream may be meant any type of framed information transferred in a sequence of sequences of frames. The latter also may e.g. include data streams, audio streams, video streams as such or a combination thereof. Furthermore 3D video images may be meant. It is possible that one video stream is split into different layers, e.g. in a layered, hierarchical structure. Each of these layers describes the video stream with a certain degree of details, e.g. starting with the basic layer which describes the pictures with a low quality. Each following layer depends on the previous layers and gives more details of the pictures, e.g. a better resolution. The present invention applies to both unlayered video streams, i.e. video stream with only one basic layer, and layered video streams. Therefore, in the following, with the terminology "video stream" the set of different layers of a stream of framed data such as a video stream are meant, or in case the set contains only one element, the only layer of framed data such as a single video stream is meant.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims. The present invention relates to a method and system for handling video streams, e.g. for switching between different video streams. Typically, for transfer reasons, such video streams are received by the client as a sequence of encoded slices. The video streams in the present invention may be encoded in any type of CODEC dividing the video stream in sequences, each sequence comprising a key-frame. Typical examples of such CODECs, the invention not being limited thereto, are the standards provided by the Motion Picture Experts Group (MPEG), such as e.g. MPEG-1 referring to ISO/IEC standard 11172, MPEG-2 referring to ISO/IEC standard 13818, MPEG-4 referring to ISO/IEC 14496 and the standards H.263 and H.264, being International Telecommunications Union standards. MPEG-4 Part 10 and H.264 are technically identical CODECs, written by the Joint Video Team. The technology used is known as Advanced Video Coding. It is possible that one video stream consists of multiple video layers. Each video layer describes the video stream in a certain degree of detail. The first layer, holding the less detailed information is called the basic layer and all the following layers will be dependent of the previous one(s). Typically the structure of the sequence of frames of different layers will be all the same. Depending on the CODEC used, the sequence of encoded slices may be a sequence of encoded frames, or, in more advanced CODECs, such as e.g. H.264/MPEG-4 Part 10, the sequence of encoded slices may be a sequence of encoded video objects, being an area of the video scene that may occupy an arbitrarily-shaped region and may exist for an arbitrary length of time and corresponding with a sequence of a part of frames. For the ease of explanation, the following description will be based on a CODEC using encoded frames, but it will be obvious for the person skilled in the art, that a sequence of encoded video objects can be used, whereby the different video objects are treated as a set of part of frames, each set of part of frames being independent of each other. In other words, each video object could be interpreted as a video stream, whereby putting all video objects together reults in the resulting video stream wanted. It is to be noted that video objects can have different structures for the sequences of frames, such that e.g. the key frames of the different video objects are not sent all at the same time. It is to be noted that the specific CODEC used is not limiting for the present invention. In other words, it is an advantage of embodiments of the present invention that the corresponding methods and systems can be used with any of the known CODECs.

Not all frames in a sequence of encoded frames, also referred to as pictures, are treated in the same way during encoding and decoding. In the present application, the following terminology will be used in general for each encoding/decoding system. By way of example, the corresponding terminology for the often used MPEG-2 standard will be indicated.
- α-frames, also referred to as a key frames, are those frames that are independent of other frames, i.e. those frames without any reference to other frames. In MPEG-2 standard, such frames may be referred to as Intra Coded frames or I-frames, in MPEG-4 Part 2, such frames may be referred to as I-VOP and in H.264/MPEG-4 part 10 such frames are referred to as instantaneous decoder refresh pictures (IDRP). Typically α-frames are used as a starting point for prediction after a video stream change and to recover from errors. All current CODECs and future CODECs have a key frame in the video sequence because a key frame is needed as a starting point when the television is switched on, for instance.
- β-frames are those frames that are only dependent on α-frames and β-frames and that can be used as a reference frame for all other frames except α-frames. In the MPEG-2 standard, predicted frames or P-frames are obtained by forward prediction from I-frames and P-frames. Such P-frames thus are examples of β-frames.
In the present patent application β-frames and optionally δ-frames will also be referred to as reference frames as they function as a reference frame for a plurality of other types of frames, i.e. β-frames, γ-frames, δ-frames and ε-frames.
- γ-frames are those frames that are dependent on other α- and β-frames but that cannot be used as a reference frame for other frames in the video stream. In the MPEG-2 standard Bi-directionally predicted frames or B-frames are obtained by forward prediction and/or backward prediction and/or interpolation from I-frames and P-frames. Such B-frames are not used as reference frames for other frames.
- δ-frames are those frames that are dependent on other α- and β-frames but, contrary to the γ-frames, they can be used as a reference frame but only for other δ-frames.
- ε-frames : frames that do no follow one of the mentioned classifications, e.g. such as D-frames in the MPEG-2 standard, being frames encoded like I-frames but whereto no reference may be made. These frames thus are not used for further decoding.
It is to be noted that during encoding and transferring of the digital video stream, some frames may be skipped and thus may not be sent at all. In the encoding, transferring and decoding process of video streams, each video stream is handled as a sequence of sequences of frames. Each sequence of frames comprises a key frame and additional basic reference frames and furthermore typically may allow a number of additional frames. Except for the key frame, the frames of a sequence of frames will depend on other frames of the sequence of frames. No references to frames outside the sequence of frames will be present, except maybe at the end of a sequence of frames where the last frames can be dependent on the first frame of the next sequence of frames. Typically such a sequence of frames corresponds with image data allowing generation of a few seconds of video stream. Therefor, when in the present application the term 'real-time' video stream is used, this might also refer to a video stream transferred in blocks corresponding with a few seconds of video. A sequence of frames is in the MPEG-1 and MPEG-2 standard referred to as a GOP. An example of such a sequence of frames in the MPEG-2 standard is the sequence IBBPBBPBBPBB. This format allows for a satisfactory video quality with an acceptable random access time (<0.5s) within a bit-rate of 1.15 Mbps, which is considered as low bit-rate. So: 1/12 I-pictures (no temporal compression); 3/12 P-pictures (+/- 75% temporal compression); 8/12 B-pictures (+/- 95% temporal compression) for a total compression ratio of +/- 82%, without taking into account spatial compression. It is to be noted that the methods and systems of the embodiments of the present patent application are not limited by the specific type of frames in the sequence of frames or by the number of frames present in the sequence of frames. The above example illustrated the use of temporal compression. In the present invention, furthermore also spatial compression may be used.

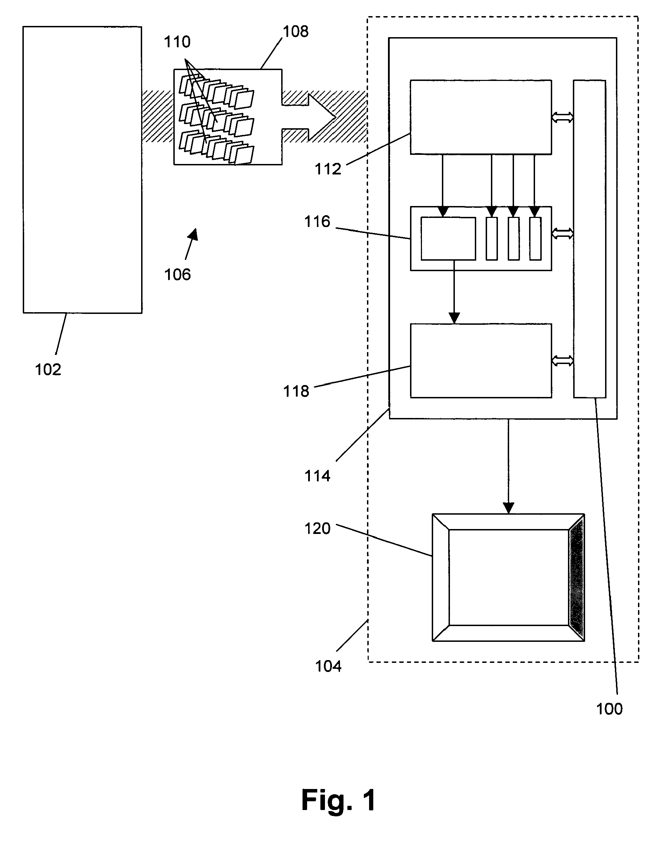

In a first embodiment, the present invention relates to a controller for controlling the handling of a plurality of digital video streams at a client side, also referred to as receiver side or user side or possibly in the network near the client side. Such a controller 100 typically may be used in a network between a server and a client, also referred to as user, an example thereof being shown in Fig. 1. Digital video typically is transferred between a server side 102, typically being a digital video broadcaster, and a client side 104 over a network 106. At the server side 102 encoding and streaming of the different video streams is done, while at the client side 104 decoding is done. The main purpose of encoding the video streams is the reduction of the needed bandwidth for streaming the video data, because bandwidth capacity typically is the main restriction of a network 106. The network 106 is responsible for the transportation of the video streams from the server 102 to the clients 104 and may be a network according to any suitable network technology such as, but not limited to digital describer line technologies xDSL, cable, satellite, digital video broadcasting - terrestrial (DVB-T) transmitting the digital signal through air, wireless WiFi technology or WiMAX technology or other wireless connections like 3G and 4G technologies (UMTS, etc.). Digital video typically is transferred over the network 106 using a transport stream 108. One such a transport stream 108 may comprise different digital video streams 110 corresponding with image content for different digital video streams. The transfer of different digital video streams 110 may be done, amongst other depending on the type of network 106 used and the number of video streams 110 to be sent, via different frequency bands, in broadband, and/or in a multiplexed way, such that typically a tuner and/or demultiplexer 112 may be used to extract different separate video streams 110. Such a tuner and/or demultiplexer may be incorporated or separate to a device 114 for handling a plurality of digital video streams (in Fig. 1 the tuner/demultiplexer is shown incorporated in device 114). Such a device 114 typically is referred to as a set-top box (STB). The device 114 furthermore comprises a buffer 116 for buffering image frames of the received digital video streams and also may comprise a decoder 118 for decoding the encoded digital video streams 110 received at the client side 104. Typically a client 104 selects at least one digital video stream to be displayed, the displaying done on any suitable type of display 120. It is to be noted that the controller and possibly the set-top box may be a network device, placed in the network rather than at the client side, such that the controller and possibly the set-top box may be used for different displays in one or multiple viewing places such as homes.

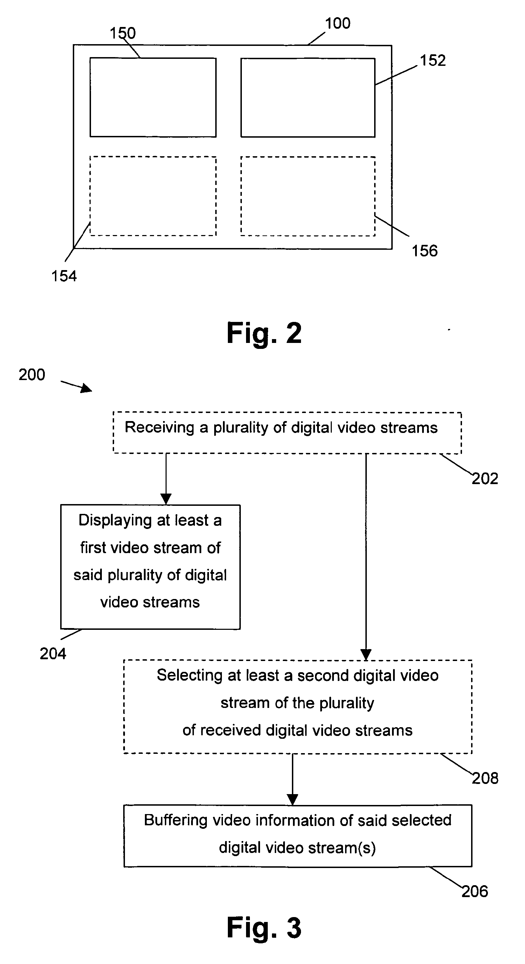

The controller 100 according to the first embodiment of the present invention is shown in more detail in Fig. 2. It comprises means for controlling the display 150 of at least a first digital video stream. The means for controlling the display 150 of at least a first digital video stream allows to display at least a first digital video stream that is selected for viewing by the client 104. Such controlling typically may comprise controlling the usual tasks performed for displaying a digital video stream 110. Such controlling may e.g. comprise selecting the at least first digital video stream from the plurality of encoded digital video streams 110 that are received, decoding the incoming frames of the at least a first digital video stream and displaying the decoded frames of the at least a first digital video stream. In order to take into account inertia of the decoder 118 or inertia of the display 120, both encoded frames, i.e. in advance of the decoding, and/or decoded frames may be buffered. This typically is limited to the most recent frames, e.g. the three most recent frames to be displayed and typically is completely independent of the sequence of frames structure of the received digital video stream 110. In systems where additional tuner/multiplexers and decoders are present, at least a first digital video stream may comprise more than one video stream, e.g. as obtained in picture-in-picture (PIP) systems. The means for controlling the display 150 of at least a first digital video stream then allows to display different digital video streams 110 simultaneously. The means for controlling the display 150 of at least a first digital video stream consequently directly or indirectly interacts with the tuner/multiplexer 112, the decoder 118 and the display 120. Besides these means 150 that allow to handle the selected video streams, the controller furthermore also comprises a means for controlling buffering 152 video information of a moving window of at least a second digital video stream that is not displayed at that time, but that might be selected in the near future. The buffered video information of a moving window of the at least a second video stream is such that it allows extraction of moving images from this buffered video information when the second digital video stream is selected. In other words, the buffered video information of a moving window of the at least a second video stream may be such that extraction of moving images can be done, based only on the buffered video information, i.e. without the need for other received frames. With a moving window of a digital video stream, typically there a window comprising most recently received information of the digital video stream. In other words, a moving window is refreshed such that it comprises most recently received information of the digital video stream. As described above, digital video streams 110 typically are built as a sequence of sequences of frames, whereby each sequence comprises a key frame, reference frames and further frames. Typically a few to a few hundreds frames may be present in a sequence of frames, such as e.g. between 6 and 300 frames. An often used number of frames at present is 15 frames per sequence. The reference frames are those frames that are, in combination with the key frame, used as reference frames to obtain full image information about other reference frames and further frames. In order to allow fast switching between digital video streams, typically information of the most recently received sequence of frames is buffered, as this will allow to display, upon selection of the corresponding digital video stream, at least part of the most recently received sequence of frames followed by further sequences received after switching. In other words, providing moving images nearly immediately after switching to a second digital video stream is obtained by buffering a moving window of the digital video stream, whereby the moving window typically comprises a number of most recently received sequences of frames, for example but not limited to the three most recently received sequences of frames, the most recently received sequence of frames and the last but one recently received sequence of frames, the most recently received sequence of frames and part of the last but one recently received sequence of frames or the most recently received sequence of frames. The buffering thus may be systematically refreshed, it is at regular moments, whereby the previously buffered frames or at least part thereof may be removed. Upon refreshment of the buffer 116, some frames of the next received sequence of frames might be buffered first before the frames of the previously received sequence of frames are removed. Thus, the means for controlling buffering 152 is adapted for, after or upon receipt of a new sequence of frames for the at least a second digital video stream, removing the frames buffered from previous sequences of frames. The means for controlling buffering 152 will be adapted for buffering at least one of a key frame or reference frames, whereby the buffered information allows to generate moving images based on the buffered frames. It may be adapted for controlling the buffering of the key frame and all reference frames of a sequence of frames for at least a second digital video stream. The latter guarantees a relatively high quality for displaying the digital video steam. If not all reference frames are buffered, a loss of quality will occur. The means for buffering also may allow the buffering of a number of further frames. Whereas in principle all frames of a sequence of frames could be buffered - e.g. in case buffer space is not an issue - the latter may be detrimental for the amount of buffer used and thus not preferable. It therefor may be advantageous to not buffer all further frames of the sequence of frames or even not to buffer any of the further frames. If a digital video stream 110 consists of different video layers, there is a choice of buffering all, some or none of the layers. If a video stream consists of different video layers, typically a basic layer, being the layer with the lowest detail, and enhancement layers will be present in the respective order. Each further enhancement layer, also referred to as higher enhancement layer, builds on the previous enhancement layers, also referred to as lower enhancement layer, providing enhanced information of the previous layers. If not all layers of a video stream are buffered, the means for buffering is adapted for controlling the buffering of at least the basic layer and possibly the lower enhancement layers are buffered. Furthermore, the controller may be adapted for controlling the buffering of layers on a frame by frame base. Once a layer of a frame has been dropped, all the higher enhancement layers above the dropped enhancement layer of that frame are useless, as they are building on the lower layers. Consequently, also on a frame by frame basis, only the basic layer and possibly the lowest enhancement layers may be buffered. Selection of layers to be buffered on a frame by frame basis may be for example such that only the basic layer and possibly the lowest enhancement layers of the further frames are buffered, while all layers are buffered of the key frame and the reference frame. In the present invention, the frames may be buffered in an encoded format, having the advantage of not needing to be decoded first. Only those encoded frames that really will be needed for display upon selection of that video stream then may be decoded, thus avoiding unnecessary use of decoder capacity. It thus is an advantage that no additional decoders are necessary for the buffering, while still providing fast switching between different video streams. Alternatively if spare decoders are present, the controller may be adapted for using spare time of these decoders to decode frames buffered from the at least a second digital video stream, this way further reducing the time needed for switching. Nevertheless, no substantial change is needed in order for the system to operate.

The at least a second digital video streams may be a plurality of video streams. Depending on the size of the buffer 116, either all digital video streams may be buffered, or a selection thereof may be buffered. Which video streams are buffered may change during operation. Such a selection may be based on heuristic results, based on the most popular video streams, based on the specific preferred video streams by the client or based on other video streams that are likely to be switched to, such as e.g. video streams having a position on the channel list being next to or close to currently displayed video streams, or a combination of any of these. The controller 100 may be adapted to perform any of the above analysis for which digital video streams are likely to be switched to.

The controller furthermore may comprise means for controlling extraction and display 154, upon selection of a second digital video stream, moving images based on the buffered frames for the second digital video stream. The means therefor may control the selecting of those buffered frames appropriate to be displayed, control the decoding of the frames necessary to generate the moving images and control the display thereof. Which buffered frames need to be extracted and displayed depends on the moment at which the selection of the second digital video stream is performed. If the latter is done at the start of a sequence of frames, the time to be bridged in order to receive a new sequence of frames for the second digital video stream will be longer than if this switching is performed at the end of a sequence of frames and preferably more buffered images will be used for providing moving images in that bridging time. Which buffered frames need to be extracted and displayed also depends on the type of decoding scenario that is used, which will be discussed further in this application. Control of the decoding of the frames and control of the display thereof also may be performed by the means for controlling the display 150 of at least a first digital video stream.

The controller 100 also may be adapted for displaying newly received sequences of frames, received after switching to the second digital video stream. Such sequences of frames will be displayed after the moving images are extracted and displayed based on the buffered frames. In principle, the further handling of the second digital video stream can be performed using the means for controlling 150 the display of at least a first digital video stream. The controller also may comprise a means for synchronising 156 the receipt of sequences of frames of the second digital video stream and the actual display of sequences of frames. The latter may e.g. be done by dropping frames in the moving images to be displayed, by allowing a standard delay between receipt and display or by changing the display rate of the frames.

The controller 100 may be made as software and installed on a host computer, which may be any suitable programmable computing device such as personal computer with a Pentium IV microprocessor supplied by Intel Corp. USA, for instance, with memory and a graphical interface such as Windows 2000 as supplied by Microsoft Corp. USA. Alternatively the controller may include a computing device, e.g. microprocessor, for instance it may a micro-controller. In particular, it may include a programmable controller, for instance a programmable digital logic device such as a Programmable Array Logic (PAL), a Programmable Logic Array, a Programmable Gate Array, especially a Field Programmable Gate Array (FPGA). The use of an FPGA allows subsequent programming of the controller, e.g. by downloading the required settings of the FPGA.

In a second embodiment, the present invention relates to a device for handling 114 a plurality of digital video streams 110 comprising the controller 100 as described in the first embodiment. Such a device for handling 114 a plurality of digital video streams 110 typically is referred to as a set-top box (STB) and is illustrated by way of example in Fig. 1. The device for handling 114 a plurality of digital video streams 110 typically comprises at least a buffer 116 for buffering frames from a plurality of video images and a controller 100 as described in detail in the first embodiment. The specific features and advantages of the controller 100 as described in the first embodiment apply to the controller 100 incorporated in the device for handling 114 a plurality of digital video streams 110 according to the second embodiment of the present invention. The amount of available storage space in the buffer 116 to buffer the different video streams 110 is restricted to the physical constraints of the device. Such physical constraints typically are the available amount of read/write memory, such as e.g. random access memory (RAM). The amount of memory of the buffer typically depends on the functionality of the device for handling 114 a plurality of digital video streams. If only decoding and displaying capability is present, typically a memory of 56MB, 128MB or 256MB is used, although the embodiments of the present invention are not limited thereto. Typically, these buffers may be fast memory modules based on RAM memory or flash memory. When recording capability is present in the device for handling 114 a plurality of digital video streams, a larger storage capacity typically is present such as e.g. 40GB, 80GB or 160GB, the embodiments of the present invention not being limited thereto. The buffer 116 fo the device for handling 114 a plurality of digital video streams preferably comprises RAM or flash memory to support the fast switching actions according to embodiments of the present invention. The buffer 116 may be considered as a first sub-buffer, wherein the buffering for the video stream displayed at the moment is performed, and a number of additional sub-buffers, each sub-buffer suitable for buffering video information for one of the at least one second digital video stream. The different sub-buffers may be virtual sub-buffers or also may be physically separated. Because the buffering of the different video streams 110 requires fast writing of big amounts of data to the memory of the device, a good memory management may be needed. Different possible memory structures may be used and some examples thereof are provided hereafter by way of illustration. If e.g. a linear memory structure is used, the buffer 116 may be regarded as one large single buffer, wherein all different frames of different video streams 110 are stored in a linear way. The different frames of one video stream are connected to each other by using a linked list. So every frame holds a pointer to the next frames of the video stream. Furthermore pointers are needed to the first frame of every video stream. This leads to a very flexible and efficient memory management, but the management of the pointers is quite complex. An alternative memory management may be based on circular buffers. In a system using circular buffers each video stream has a dedicated amount of memory. A key frame from the video stream is the first frame in the buffer. The following frames of the video stream are stored after this key frame. For this system, one or two pointers per video stream are needed, as there always needs to be a write pointer and in case the video stream is being displayed, also a read pointer is needed. Because, for this system, a dedicated amount of memory must be assigned to every video stream, this approach requires relatively much buffer capacity, but the management of the pointers are easier in comparison to the linear buffer approach. The system for handling 114 the plurality of digital video streams 110 is positioned at the client side 104. It may be incorporated in a display system, it may be part of a computing means or it may be a separate set-top box positioned between a central receiving point at the client side 104 and at least one display system.

In a third embodiment, the present invention relates to a method for handling a plurality of digital video streams. The method is suitable for handling a plurality of digital video streams received in an encoded format in sequences of frames. By way of illustration, basic and optional steps are shown in Fig. 3 for an exemplary method 200 according to the present embodiment. The method 200 is adapted for allowing fast switching between digital video streams 110. It typically may comprise receiving a plurality of digital video streams 110, transferred over a network 106, as described above and illustrated in step 202. The method according to the present embodiment comprises displaying at least a first digital video stream to be displayed, i.e. for example the video stream of a video channel that a user is watching, shown by step 204. E.g. for a picture-in-picture system or for a multi-view system having a number of displays, multiple video streams may be displayed at the same time. In order to allow fast switching, the method furthermore comprises buffering video information for a moving window of at least a second digital video stream, that is not displayed at that moment, as shown in step 206. The buffering allows extraction of moving images from the buffered video information when the second digital video stream is selected to be displayed, i.e. when a user decides to switch from a first video stream to the second video stream, also referred to as zapping to the second video stream. For a sequence of frames comprising a key frame, at least one reference frame and further frames, whereby the reference frames are suitable for deriving frame information for the further frames, the buffered video information may comprise at least one of a key frame or a reference frame of a recently received sequence of frames of the second video stream, e.g. the last received sequence of frames. Typically, not all of the further frames are buffered, but a smart buffering system may be applied. In an alternative embodiment no further frames are buffered. Buffering at least one of a key frame or a reference frame may e.g. comprise buffering the key frame and may e.g. comprise buffering the key frame and all reference frames. The frames typically may be buffered in an encoded format, thus allowing to reduce the needed memory space and avoiding the need for first decoding the frames. Consequently less decoding time may be needed which is advantageous as the major part of the buffered frames will not be used anyway.

The at least a second video stream for which video information is buffered may be one video stream, but preferably is a number of video streams. The video streams for which video information is buffered could either be predetermined or could be variably selected, e.g. based on a context of the received video streams, e.g. based on statistical information of a client's viewing behaviour, e.g. based on user-inputted information or e.g. based on another analysis of a client's viewing behaviour, such as e.g. by using a neural network. Alternatively, or in combination therewith, the video streams for which video information is buffered could be based on the digital video stream that is displayed at that moment. The plurality of digital video streams may e.g. be ranked and selecting a video stream wherefore video information is buffered may be based on the ranking, e.g. it may be those video streams which have a number close to the number of the video stream that is displayed at that moment. In other words, the at least a second digital video stream of the plurality of received digital video streams may optionally be explicitly selected, as shown in optional step 208. The method also may comprise indicating to the client, e.g. by LED indications or by indications on the screen, which video streams are available for fast switching. Also an advanced remote controller can be used for indicating the video streams that are available for fast switching. The list of these video streams can be used as the dynamically adapted order of the available video streams. The latter could e.g. be commercially exploited, e.g. by making a digital video stream of an advertiser always available for fast switching upon payment of a fee. In the present invention, buffering video information typically may consist of buffering video information about a moving window of a video stream. With a moving window of a digital video stream, typically there a window comprising most recently received information of the digital video stream. In other words, a moving window is refreshed such that it comprises most recently received information of the digital video stream. Such a moving window may comprise frames of one sequence of frames or possibly of a few sequences of frames. This buffering typically is done to allow fast switching between digital video streams. An advantage of buffering only such a small window of a video stream is that in principle a plurality of digital video streams may be buffered, such that switching to any of this plurality of digital video streams can be done relatively fast. Typically frames of the most recently received sequence of frames or of a few of the most recently received sequences of frames for the at least a second digital video stream may be buffered. This allows to display digital video streams in "real time" or almost "real time", i.e. with a delay of less than a few sequences of frames, e.g. a delay of less than the showing time of one sequence of frames. The buffering also may comprise buffering at least one of a key frame or reference frame(s) from a last but one received sequence of frames for said at least a second digital video stream. In other words, such a moving window may comprise - although the invention is not limited thereto - a number of most recently received sequences of frames, such as e.g. the three most recently received sequences of frames, the two most recently received sequences of frames, the most recently received sequence of frames and part of the last but one most recently received sequence of frames or the most recently received sequence of frames. In order to reduce the necessary buffer capacity, frames may be buffered with a resolution or size lower than a resolution or size of the received frames, in general, frames may be buffered at a lower quality. It is also possible that the received frames already have a lower quality.

With buffering video information about a window of a video stream, there also may be meant that upon receipt of a new most recently received sequence of frames, the buffering may be refreshed. This refreshing may be reapplying the buffering step either immediately upon receipt of a new most recently received sequence of frames or after part of a new most recently received sequence of frames has already been buffered. The refreshing comprises removing the frames received during the last but one received sequence of frames or received earlier. In other words systematically buffering of video information about the most recently received part of the video stream may be performed. If sufficiently buffer memory is present, more information may be buffered and refreshing may be done less frequently.

In order to further save time, decoding of at least part of the buffered frames, e.g. part of the buffered key frame or reference frames, for at least one of the digital video streams for which video information is buffered, may be applied. Such decoding may for example be performed using spare time of a decoder used for displaying the digital video stream selected for display by the client or e.g. using a spare decoder, e.g. present for allowing picture-in-picture display.

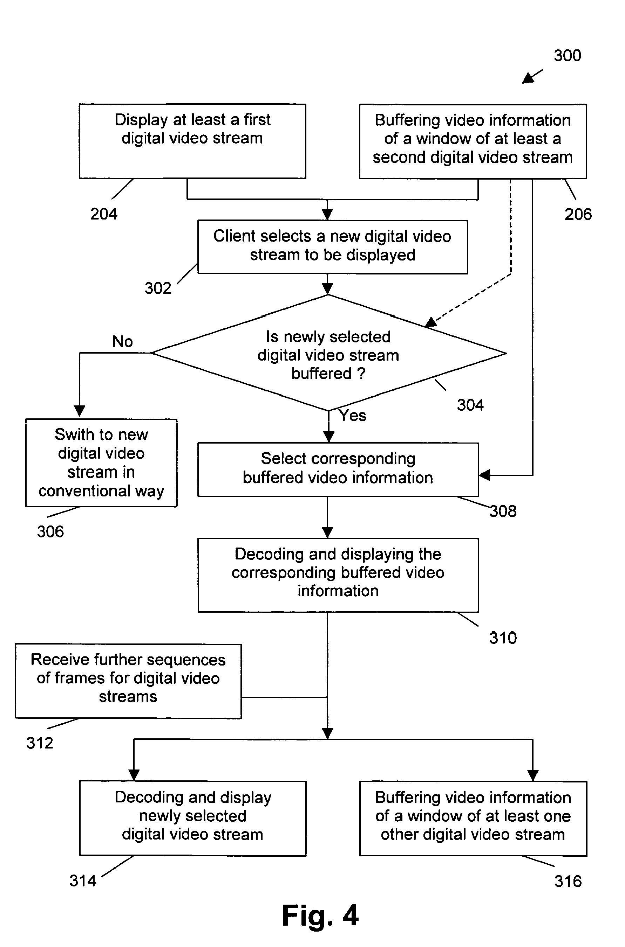

When a client wishes to switch from a first digital video stream to a second digital video stream, typically a first digital video stream is displayed. According to the present method, video information of a moving window of the second digital video stream may also be buffered at that moment. Upon switching to a video stream that is part of the video streams for which video information is buffered, moving images may be extracted from the buffered video information and may be displayed nearly immediately. Switching may be performed by a method 300 as shown in Fig. 4, illustrating basic and optional steps for such a method 300. As mentioned, before switching, according to the present embodiment a first digital video stream is displayed, as shown in step 204 and video information for a window of at least a second digital video stream is buffered, as shown in step 206. When a client selects a new digital video stream to be displayed, i.e. when the client zaps between two digital video streams, shown in step 302, it is checked whether video information about a moving window of the newly selected digital video stream is buffered. The latter is performed in step 304. If this is not the case, switching to and displaying of the newly selected digital video stream occurs in a conventional way, as shown in step 306, typically requiring a large delay time. If video information about the newly selected digital video stream is buffered - which information might be available from actions in step 206 - the corresponding buffered video information may be selected or extracted from the buffer. The latter is performed in step 308, based on the buffering performed in step 206. The selected buffered video information then is decoded, if not already done using spare decoders, and displayed, which is performed in step 310. Meanwhile, further sequences of frames for the digital video streams will be received, shown in step 312, allowing to seamless or nearly seamless switch from the display of the moving images based on the buffered video information to display of newly received digital video stream, which is shown in step 314. In other words, during the display of the decoded frames, typically a new sequence of frames will be received for the newly selected digital video stream, which allows initiation of the standard display of the newly selected digital video stream providing a seamless transition between display of the buffered video information and the standard display. Typically for standard display, only the most recent frames to be displayed are buffered, decoded and displayed. Furthermore, buffering video information of a moving window of at least one other digital video stream typically will be performed, the at least one other digital video stream being selected e.g. based on content, client preferences or ranking of the different video streams, as shown in step 316. Additional buffers may be provided, e.g. before the decoder in order to solve for the inertia of the decoder, or after the decoder, e.g. to solve the inertia of the network, e.g. if packets sent over a network suffer from network delay, this still allows displaying video information during a period of time when no video data is received.

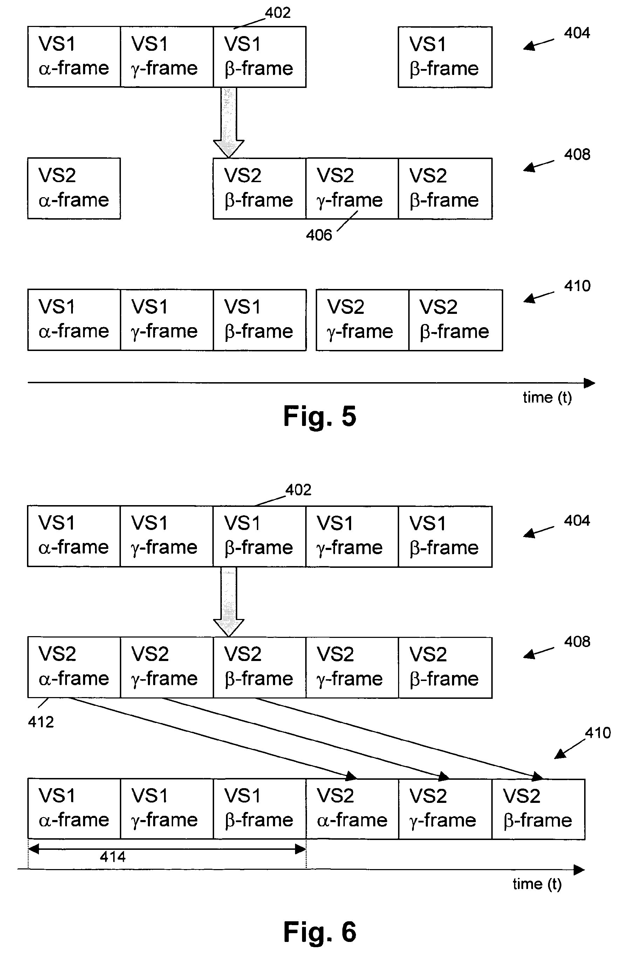

In order to provide a seamless transition between the frames derived from the buffered video information and the newly received sequences of frames, synchronisation might be necessary. The latter can be done by installing a fixed delay or by dropping some frames. The need for synchronisation and the type thereof typically is correlated with the way of decoding and displaying. Different scenarios are possible, three of them shown, by way of illustration in Fig. 5 to Fig. 7. In these examples, by way of illustration, the first video stream VS1 and the second video stream VS2 both consist of sequences of frames having a α/γ/β/γ/β structure.

In a first scenario, the buffered video information is used for generating moving images, i.e. the frames of the buffered video information may be decoded, as these typically are stored in an encoded format, whereby if zapping occurred during the N^{th} frame 402 of a sequence of frames for a first video stream VS1, the N+1^{th} frame 406 of a sequence of frames of the second video stream VS2 is shown. In this scenario, the sequences of frames for both video streams preferably may be equal in length. Fig. 5 illustrates this principle, whereby the frames displayed prior switching and the frames buffered after switching 404 are indicated for the first video stream VS1, the frames buffered before switching and the frames displayed after switching 408 are indicated for the second video stream VS2 and the frames displayed to the client are illustrated by frame set 410. A small zapping time may exist as decoding the first frame-to-be-displayed from the second video stream 408 typically requires decoding information from previous not-displayed frames, such as e.g. the key frame and other reference frames. It is to be noted that in this scenario it is not necessary to store all the video frames of a second video stream, as some frames are not needed for decoding other frames.

In a second scenario, shown in Fig. 6, the buffered video information is used for generating moving images, i.e. frames of the buffered video information may be decoded, as these typically are stored in an encoded format, whereby upon zapping, all frames that can be derived from the buffered video information from the second video stream are shown. The moment the user zaps to a second video stream VS2, the stored key frame 412 is shown immediately after the frame 402 of the first video stream VS1 wherein zapping occurred, while in the mean time further decoding of further frames of the second video stream VS2 can be done, leading to an almost nihil zapping time. A disadvantage may be that the user is not looking real-time to the second video stream VS2 but that a delay 414 occurs. The displayed frames have a fixed delay 414 with respect to their receipt. The amount of delay 414 depends on the time whereon zapping is performed, with respect to the sequence of frames. This delay will however be smaller than the showing time of one sequence of frames. In order to take this delay into account and to be sure that the frames are shown at the right moment in time, the timestamps of the frames need to be changed or the clock of the decoder needs to be adapted.

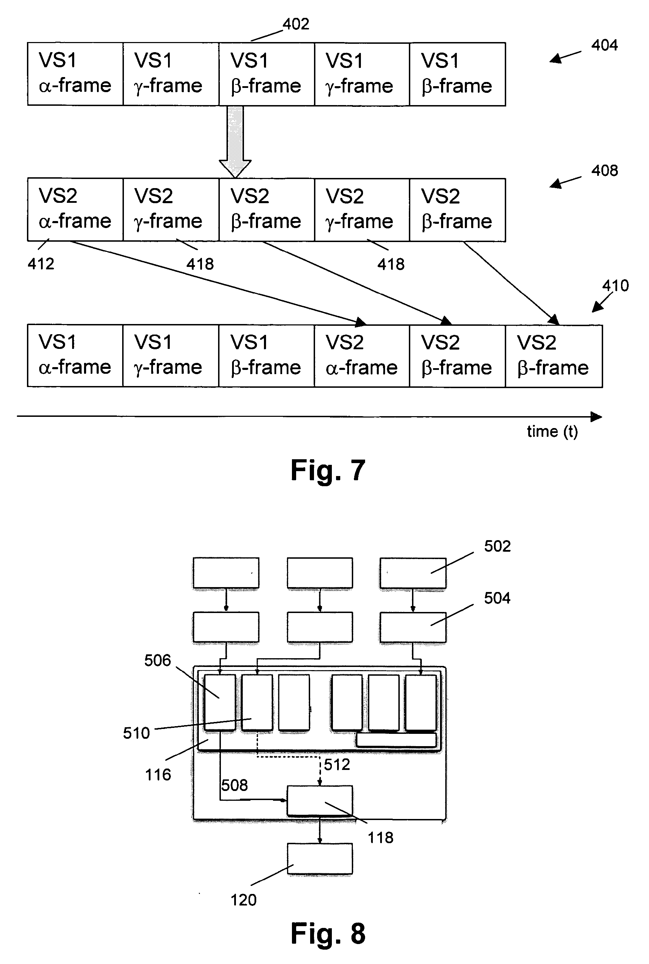

In a third exemplary scenario, the buffered video information is used for generating moving images, i.e. frames of the buffered video information may be decoded, as these typically are stored in an encoded format, whereby upon zapping, different frames of the sequence of frames of the second video stream, including frames at the start of the sequence 416, are displayed upon zapping. As frames at the start of the sequence, e.g. the key frame 412, are shown after zapping, the time needed for zapping is almost nihil. In the present example, resynchronisation between the display and the receipt of frames is obtained by dropping some frames 418, e.g. 1 picture per second or, if present, γ frames. The latter also requires adaptation of the timestamps of the frames or of the clock of the decoder, albeit temporarily. In order to resynchronise, it is also possible to show the frames for a shorter time, e.g. if normally each frame is displayed for 25 milliseconds this could be reduced to 20 milliseconds. The latter is shown, by way of illustration in Fig. 7.

In a fourth scenario, a guaranteed minimum zapping time is obtained by combining scenario 1 with scenarios 2 or 3. The first frames of the sequence of frames then are decoded as described in scenario 1, as long as not all buffered pictures are decoded or as long as the given minimum zapping time is not exceeded. If the given minimum zapping time is exceeded, the remaining buffered frames are decoded and displayed, resp. with a fixed delay or with a decreasing delay. The latter may be advantageously used in the buffer strategy applied, e.g. by buffering only the key-frame and reference frames in the first half of the sequence of frames, and by buffering all frames in the second half of the sequence of frames.

Alternatively, also reference frames could be dropped, although this will lead to loss of quality. After switching, the displayed frames will become better and better and at the moment the next key-frame is displayed, full quality will be achieved again.

By way of illustration, the video data flow for a method according to the present invention is illustrated for the case of video streams in MPEG video standard in Fig. 8. At the top, the encoded video files 502 are shown. Next, these video files are streamed 504 to the clients. Dependent on the network capacity, different video streams are buffered, resulting in buffered video information 506 of the displayed video stream 508 and buffered video information 510 of the video stream 512 not displayed at the moment, in the set-top box of the clients. The video stream 508 that is watched by the user will be decoded and sent to the display, as shown by the full line. When the user switches to another previously non-displayed video stream, as shown by the dashed line, buffered data of the new video stream 512, will be used to generate moving images thus reducing the zapping time. Depending on the buffered video data of the other video streams, multiple scenarios are possible for decoding and displaying leading to a seamless transition between moving images based on the buffered video information and moving images based on newly received sequences of frames and standard display thereof.

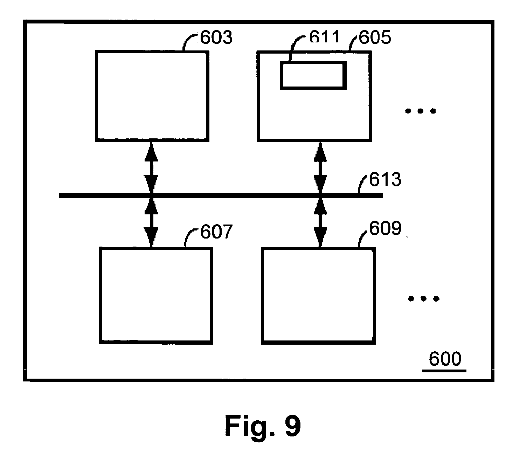

In a further embodiment, the invention relates to a processing system wherein the method embodiments according to the present invention are implemented, or in other words, wherein the method for handling a plurality of digital video streams according to the present invention, whereby buffering video information about a moving window of a non-displayed digital video stream is performed such that moving images can be derived from the buffered video information. An exemplary processing system 600 is shown in Fig. 9. Fig. 9 shows one configuration of processing system 600 that includes at least one programmable processor 603 coupled to a memory subsystem 605 that includes at least one form of memory, e.g., RAM, ROM, and so forth. A storage subsystem 607 may be included that has at least one disk drive and/or CD-ROM drive and/or DVD drive. In some implementations, a display system, a keyboard, and a pointing device may be included as part of a user interface subsystem 609 to provide for a user to manually input information. Ports for inputting and outputting data also may be included. More elements such as network connections, interfaces to various devices, and so forth, may be included, but are not illustrated in Fig. 9. The various elements of the processing system 600 may be coupled in various ways, including via a bus subsystem 613 shown in Fig. 9 for simplicity as a single bus, but will be understood to those in the art to include a system of at least one bus. The memory of the memory subsystem 605 may at some time hold part or all (in either case shown as 611) of a set of instructions that when executed on the processing system 600 implement the step(s) of the method embodiments described herein. Thus, while a processing system 600 such as shown in Fig. 9 is prior art, a system that includes the instructions to implement aspects of the present invention is not prior art, and therefore Fig. 4 is not labelled as

### prior art.

It is to be noted that the processor 603 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. Furthermore, aspects of the invention can be implemented in a computer program product tangibly embodied in a carrier medium carrying machine-readable code for execution by a programmable processor. Method steps of aspects of the invention may be performed by a programmable processor executing instructions to perform functions of those aspects of the invention, e.g., by operating on input data and generating output data. Accordingly, the present invention includes a computer program product which provides the functionality of any of the methods according to the present invention when executed on a computing device. Further, the present invention includes a data carrier such as for example a CD-ROM or a diskette which stores the computer product in a machine-readable form and which executes at least one of the methods of the invention when executed on a computing device. Nowadays, such software is often offered on the Internet or a company Intranet for download, hence the present invention includes transmitting the computer product according to the present invention over a local or wide area network.

It is an advantage that for the present invention only the buffer and more particularly the controlling thereof needs to be changed in a system for handling digital video streams, i.e. no changes are needed to e.g. the decoder.

It is to be noted that the system also works for dynamic sequences of frames, i.e. whereby the length of the sequences of frames used varies within a single video stream or between video streams. As information about the length of the sequence of frames may be provided together with the video information buffered for a second digital video stream, the latter could be handled using methods and systems according to the present invention, without substantial additional problems.

It is to be noted that the frame transmission order and the frame decoding order is not necessarily the same as the frame display order.

By applying a smart buffering strategy of the different video streams, this delay can be reduced to times similar to zapping on the analogue television. It is an advantage of embodiments of the present invention that the delay in displaying digital video stream in real-time or nearly real-time for embodiments of the present invention may be up to 10 times smaller than for existing digital systems.

It is an advantage of the present invention that no changes are needed at the server side of the network, nor in intermediate active nodes of the network, i.e. only changes at the client side of the network are needed.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. A method (200) for handling a plurality of digital video streams (110), the method comprising
- displaying at least a first digital video stream to be displayed and
- buffering video information for a moving window of at least a second digital video stream allowing extraction of moving images from the buffered video information when the second digital video stream is selected to be displayed

2. A method (200) according to claim 1, each of the digital video streams (110) being encoded in sequences of frames, each of the sequences of frames comprising a key frame, at least one reference frame and further frames, said key frame and at least one reference frame suitable for deriving frame information for said further frames,
wherein buffering video information comprises buffering at least one of said key frame or said at least one reference frame of at least a second digital video stream.

3. A method (200) according to claim 2, the method comprising not buffering all of said further frames for a moving window of at least a second digital video stream.

4. A method (200) according to any of claims 2 to 3, wherein buffering said at least one of said key frame or said at least one reference frame comprises buffering the key frame and all reference frames of a sequence of frames for said moving window of at least a second digital video stream.

5. A method (200) according to any of claims 2 to 4, wherein buffering said at least one of said key frame or said at least one reference frame furthermore comprises buffering no further frames in a first half of a sequence of frames and buffering all further frames in a second half of a sequence of frames.

6. A method (200) according to any of claims 2 to 5, wherein said buffering comprises buffering said frames of the most recently received sequence of frames for said at least a second digital video stream.

7. A method (200) according to any of claims 2 to 6, the method comprising refreshing said buffering when a new most recently received sequence of frames for said at least a second digital video stream is received.

8. A method (200) according to any of the previous claims, wherein said buffering video information for a moving window of at least a second digital video stream comprises buffering video information in an encoded format.

9. A method (200) according to any of the previous claims wherein buffering for at least a second digital video stream comprises buffering for a plurality of further digital video streams.

10. A method (200) according to any of the previous claims, the method furthermore comprising, decoding video information for at least one of said at least a second digital video stream.

11. A method (200) according to any of the previous claims, said digital video streams comprising a number of video layers, wherein said buffering is performed for at least one layer of said at least a second digital video stream.

12. A method (200) according to any of the previous claims, the method furthermore comprising, prior to said buffering, selecting said at least a second digital video stream based on a context of said plurality of digital video streams.

13. A method (200) according to any of the previous claims, the method furthermore comprising, providing to the viewer an indication of the digital video streams for which video information is buffered.

14. A method (200) according to any of the previous claims, wherein the buffering comprises buffering video information with a resolution or size lower than a resolution or size of the received video information.

15. A method (300) for switching between a plurality of digital video streams, the method comprising
- displaying at least a first digital video stream to be displayed and
- buffering video information for a moving window of at least a second video stream allowing extraction of moving images from the buffered video information when the second video stream is selected to be displayed, and upon selection of said digital second video stream for displaying,
- extracting and displaying moving images from the buffered video information and
after said extracting and displaying,
displaying newly received video information for said second digital video stream.

16. A method (300) according to the previous claim, each of the digital video streams being encoded in sequences of frames, each of the sequences of frames comprising a key frame, at least one reference frame and further frames, said key frame and at least one reference frame suitable for deriving frame information for said further frames, wherein buffering video information comprises buffering at least one of said key frame or said at least one reference frame of at least a second digital video stream.

17. A method (300) according to claim 16, the method furthermore comprising, upon selection of said second digital video stream for displaying, adjusting the number of frames displayed in order to synchronise receiving sequences of frames for said second digital video stream and displaying newly received sequences of frames for said second digital video stream.

18. A controller (100) for handling a plurality of digital video streams (110), wherein the controller (100) comprises means for controlling the display (150) of at least a first digital video stream
**characterised in that**
the controller (100) furthermore comprises means for controlling buffering (152) of video information for a moving window of at least a second digital video stream allowing extraction of moving images from the buffered video information when the second digital video stream is selected to be displayed.

19. A controller (100) according to the previous claim, each of the digital video streams (110) being encoded in sequences of frames, each of the sequences of frames comprising a key frame, at least one reference frame and further frames, said key frame and at least one reference frame suitable for deriving frame information for said further frames, wherein said means for controlling buffering of video information comprises means for controlling buffering at least one of said key frame or said at least one reference frame of at least a second digital video stream.

20. A controller (100) according to claim 19, wherein said means for controlling buffering (152) is adapted so as to not buffer all of said further frames.

21. A controller (100) according to any of claims 18 to 20, wherein said means for controlling buffering (152) is adapted so as to buffer video information in an encoded format.

22. A controller (100) according to any of claims 18 to 21, the controller being adapted for, upon selection of a second digital video stream to be displayed, controlling extraction and display of moving images from said buffered video information and said controller being adapted for, after said extraction and display, controlling display of newly received video information for said second digital video stream.

23. A controller (100) according to claim 22, the controller being adapted for, upon the display of moving images for said second digital video stream, synchronising the receipt of newly received video information and the display thereof.

24. A device for handling (114) a plurality of digital video streams (110), the device comprising
- a buffer (116) for buffering frames from a plurality of video images and
- a controller (100) for controlling the display of at least a first digital video stream and for controlling buffering of video information for a moving window of at least a second video stream to said buffer, said buffering allowing extraction of moving images from the buffered video information when the second digital video stream is selected to be displayed.

25. A device (114) according to claim 24, each of said digital video streams (110) may comprise sequences of frames, each of said sequences of frames comprising at least a key frame, at least one reference frame and further frames, said at least one key frame and said at least one reference frame suitable for deriving frame information for said further frames, wherein said buffered video information comprises at least one of a key frame or at least one reference frame of at least a second digital video stream.

26. A device (114) according to any of claims 24 to 25, the device (114) furthermore comprising a decoder (118) for decoding of frames of said at least a first digital video stream and for decoding of said buffered video information.

27. A device (114) according to any of claims 24 to 26, the controller (100) being adapted for controlling said decoding of the buffered video information when the second digital video stream is selected to be displayed.

28. A device (114) according to any of claims 24 to 27, wherein said buffer (116) for buffering video information from a plurality of video images comprises a first sub-buffer for buffering said frames of a first video stream and at least one second sub-buffer for buffering video information for at least a second digital video stream.

29. A display system for displaying at least one digital video stream from a plurality of video streams, the display system comprising a controller according to any of claims 18 to 23 or a device for handling a plurality of digital video frames according to any of claims 24 to 28.

30. A computer program product for executing the method as claimed in any of claims 1 to 17.

31. A machine readable data storage device storing the computer program product of claim 30.

32. Transmission of the computer program product of claim 30 over a local or wide area telecommunications network.
